# EUROPEAN PATENT APPLICATION

(11) **EP 4 749 781 A1**
(43) Date of publication of application: **27.05.2026**
(21) Application number: 24900938.2
(22) Date of filing: 22.11.2024
(51) Int. Cl.: H01M 50/183, H01M 50/186, H01M 50/193, H01M 50/184, H01M 50/167, H01M 50/197, H01M 50/249, H01M 50/152

(54) **BATTERY CELL AND BATTERY PACK AND VEHICLE INCLUDING SAME**

(30) Priority: 04.12.2023 KR 20230173552
(71) Applicant: LG Energy Solution, Ltd., Seoul 07335 (KR)
(72) Inventor: KIM, Hyun-Woo, Daejeon 34122 (KR)
(74) Representative: Goddar, Heinz J.
(86) International application number: PCT/KR2024/018592
(87) International publication number: WO 2025/121751

(57) **Abstract**

A battery cell according to an embodiment of the present disclosure may include: an electrode assembly including a first electrode, a second electrode, and a separator interposed therebetween; a battery housing configured to accommodate the electrode assembly through an opening formed on one side; a top cap assembly configured to cover the opening, electrically connected to the first electrode, and electrically insulated from the battery housing; a sealing gasket interposed between the battery housing and the top cap assembly, and configured to electrically insulate the battery housing and the top cap assembly from each other; and an expandable member provided in at least a portion of the sealing gasket so as to be in a state expected to be expanded or an expanded state, and configured to fill a gap between the sealing gasket and the top cap assembly when in the expanded state.

## Description

### TECHNICAL FIELD

The present disclosure relates to a battery cell, and a battery pack and a vehicle including the same.

This application is based on and claims priority from Korean Patent Application No. 10-2023-0173552, filed on December 04, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell, i.e., the unit battery cell, is approximately 2.5 V to 4.5 V. Therefore, when a higher output voltage than this is required, multiple battery cells are connected in series to form a battery pack. In addition, depending on the charge/discharge capacity required for the battery pack, multiple battery cells are connected in parallel to form a battery pack. Therefore, the number of battery cells included in the battery pack may be set variously according to the required output voltage and/or charge/discharge capacity.

Meanwhile, the sealing gasket in contact with the crimping portion provides sealing and insulation between the top cap assembly and the battery housing. The conventional sealing gasket is applied with asphalt pitch on the surface after injection, thereby strengthening the sealing force. However, when the asphalt pitch is not evenly distributed on the surface of the sealing gasket, the sealing force is reduced. In addition, the difference in shape between the sealing gasket and the top cap assembly after the crimping process generates a void space. This void space may form a leakage path of the electrolyte and/or gas when the internal pressure of the battery housing increases, which increases the risk of electrolyte leakage.

### DISCLOSURE

### Technical Problem

In one aspect, the present disclosure aims to eliminate the void space between the top cap assembly and the sealing gasket after the crimping process.

In another aspect, the present disclosure aims to reduce the residue of the asphalt pitch applied to the sealing gasket.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: an electrode assembly including a first electrode, a second electrode, and a separator interposed therebetween; a battery housing configured to accommodate the electrode assembly through an opening formed on one side; a top cap assembly configured to cover the opening, electrically connected to the first electrode, and electrically insulated from the battery housing; a sealing gasket interposed between the battery housing and the top cap assembly, and configured to electrically insulate the battery housing and the top cap assembly from each other; and an expandable member provided in at least a portion of the sealing gasket so as to be in a state expected to be expanded or an expanded state, and configured to fill a gap between the sealing gasket and the top cap assembly when in the expanded state.

The sealing gasket may include a material having insulation and elasticity.

The sealing gasket may include polybutylene terephthalate (PBT).

The sealing gasket may include: a first part having a ring shape extending in a direction parallel to an axial direction of the battery cell and configured to be bent toward the inside of the battery cell; a second part extending horizontally from a lower end of the first part toward a central axis of the battery cell; and a third part extending downward from an inner end of the second part and having a radius smaller than a radius of the first part.

The battery housing may have a beading portion configured to be recessed inward along an outer circumference thereof.

The sealing gasket may be seated on the beading portion.

The first part and the second part may be seated on the beading portion.

The expandable member may include a foaming agent, and the foaming agent may include at least one of ADCA, OBSH, DPT, and an inorganic substance.

The expandable member may include a foaming agent, and the foaming agent may foam at 181 to 198 degrees C.

The expandable member may include a foaming agent, and the foaming agent may be disposed on an inner surface of the sealing gasket.

The expandable member may include a foaming agent, and the foaming agent may be disposed on the first part.

The expandable member may include a foaming agent, and the foaming agent may be disposed in a central area of the first part.

The expandable member may include a foaming agent, and the foaming agent may be disposed in a bent portion of the first part.

In another aspect of the present disclosure, there is provided a battery pack including at least one battery cell according to the embodiment described above.

In another aspect of the present disclosure, there is provided a vehicle including at least one battery pack according to the embodiment described above.

### Advantageous Effects

According to one aspect of the present disclosure, the void space between the top cap assembly and the sealing gasket is able to be effectively eliminated after the crimping process.

According to another aspect of the present disclosure, the residue of the asphalt pitch applied to the sealing gasket is able to be reduced.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery cell according to an embodiment of the present disclosure.
FIG. 2 is a cross-sectional perspective view of FIG. 1.
FIG. 3 is a cross-sectional view of FIG. 1.
FIG. 4a is a perspective view of a sealing gasket included in the battery cell in FIG. 1.
FIG. 4b is a partially cross-sectional view of a sealing gasket included in the battery cell in FIG. 1.
FIG. 5 is a drawing illustrating a sealing gasket according to an embodiment of the present disclosure.
FIG. 6 is a drawing illustrating a sealing gasket according to another embodiment of the present disclosure.
FIG. 7 is a drawing illustrating a sealing gasket according to another embodiment of the present disclosure.
FIG. 8 is a drawing illustrating a sealing gasket according to another embodiment of the present disclosure.
FIG. 9 is a drawing illustrating a state of a battery cell before foaming according to an embodiment of the present disclosure.
FIG. 10 is a drawing illustrating a state of a battery cell after foaming according to an embodiment of the present disclosure.
FIG. 11 is a drawing illustrating a battery pack including the battery module in FIG. 1.
FIG. 12 is a drawing illustrating a vehicle including the battery pack in FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the sizes of some elements shown in the attached drawings may be exaggerated, instead of reflecting their actual sizes, for convenience of explanation and clarification of the present disclosure.

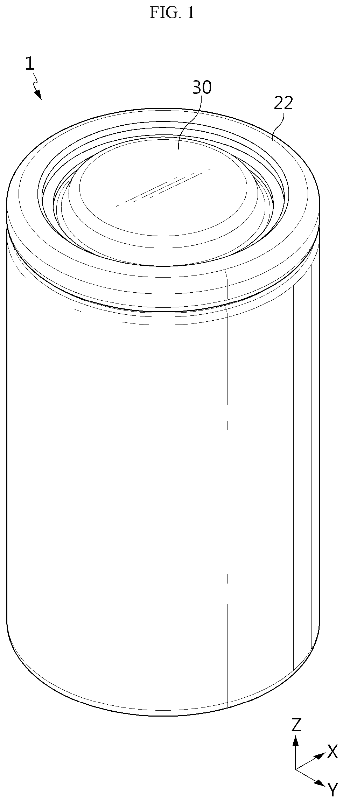

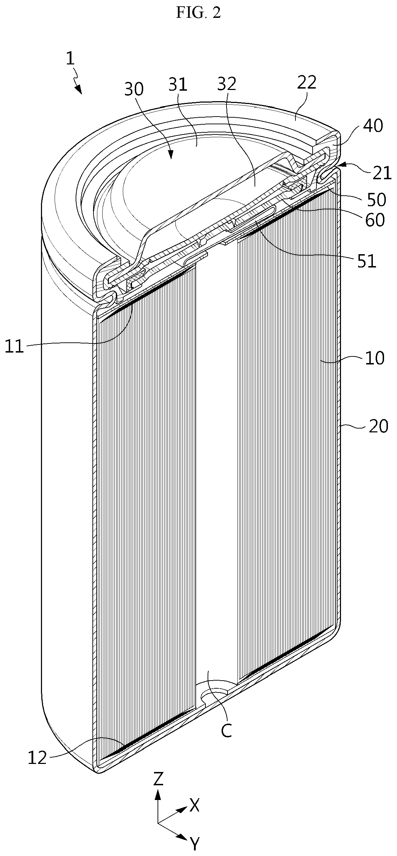

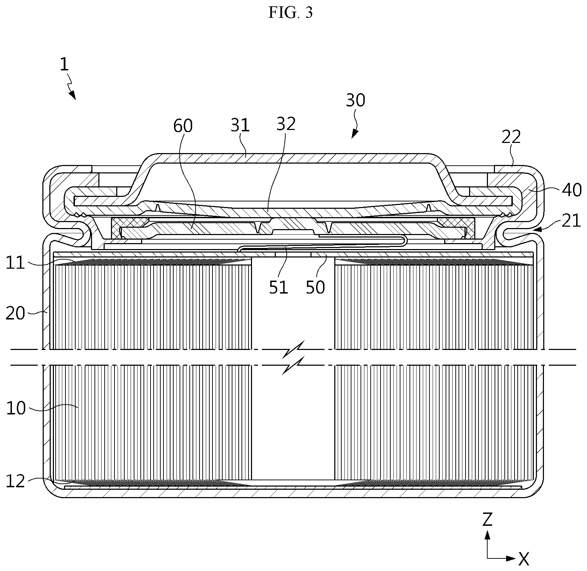

FIG. 1 is a perspective view of a battery cell 1 according to an embodiment of the present disclosure, and FIG. 2 is a cross-sectional perspective view of FIG. 1. FIG. 3 is a cross-sectional view of FIG. 1.

Referring to FIGS. 1 and 2, the cylindrical battery cell 1 according to an embodiment of the present disclosure includes an electrode assembly 10, a battery housing 20, a top cap assembly 30, and a sealing gasket 40. The battery cell 1 may further include a current collector and/or a safety element 60.

The electrode assembly 10 includes a first electrode having a first polarity, a second electrode having a second polarity, and a separator interposed between the first electrode and the second electrode. The first electrode is a positive electrode or a negative electrode, and the second electrode corresponds to an electrode having a polarity opposite that of the first electrode.

The electrode assembly 10 may have, for example, a jelly-roll structure. That is, the electrode assembly 10 may be manufactured by winding a laminate, formed by stacking a first electrode current collector and a second electrode current collector having a sheet shape at least once with a separator interposed therebetween, in one direction about a winding center C. In this case, an additional separator may be provided on the outer surface of the electrode assembly 10 for insulation from the battery housing 20. Any jelly-roll structure known in the art may be applied to the present disclosure without limitation.

The first electrode includes a first electrode current collector and a first electrode active material coated on one or both surfaces of the first electrode current collector. The first electrode current collector has a first uncoated area 11 on which the first electrode active material is not coated at one end thereof in the widthwise direction (parallel to the Z-axis). The uncoated area functioning as a first electrode tab will be referred to as a first uncoated area 11 hereinafter. The first uncoated area 11 is provided at the top of the electrode assembly 10 accommodated in the battery housing 20 in the height direction (parallel to the Z-axis). That is, the first electrode current collector includes a first uncoated area 11, which does not have an active material layer coated on a long-side end and is exposed to the outside of the separator, and a portion of the first uncoated area 11 is used as an electrode tab by itself. The first uncoated area 11 may be, for example, a positive electrode tab.

Meanwhile, at least a portion of the first uncoated area 11 may include a plurality of segments divided along the winding direction of the electrode assembly 10. In this case, the plurality of segments may be bent in the radial direction of the electrode assembly 10. The plurality of bent segments may overlap in multiple layers.

The second electrode includes a second electrode current collector and a second electrode active material coated on one or both sides of the second electrode current collector. The second electrode current collector has a second uncoated area 12 on which the second electrode active material is not coated at one end thereof in the widthwise direction (parallel to the Z-axis). The uncoated area functioning as a second electrode tab will be referred to as a second uncoated area 12 hereinafter. The second uncoated area 12 is provided at the top of the electrode assembly 10 accommodated in the battery housing 20 in the height direction (parallel to the Z-axis). That is, the second electrode current collector includes a second uncoated area 12, which does not have an active material layer coated on a long-side end and is exposed to the outside of the separator, and a portion of the second uncoated area 12 is used as an electrode tab by itself. The second uncoated area 12 may be, for example, a positive electrode tab. Meanwhile, at least a portion of the second uncoated area 12 may include a plurality of segments divided along the winding direction of the electrode assembly 10. In this case, the plurality of segments may be bent in the radial direction of the electrode assembly 10. The plurality of bent segments may overlap in multiple layers.

The first uncoated area 11 and the second uncoated area 12 extend in opposite directions along the height direction (parallel to the Z-axis) of the cylindrical battery cell 1. The second uncoated area 12 extends toward a closed portion of the battery housing 20, and the first uncoated area 11 extends toward an opening of the battery housing 20.

In the present disclosure, any active material known in the art may be used without limitation as the positive electrode active material coated on the positive electrode plate and the negative electrode active material coated on the negative electrode plate.

The battery housing 20 may be configured to include an opening on one side and may accommodate the electrode assembly 10 through the opening.

Specifically, the battery housing 20 is a roughly cylindrical container having an opening formed at the bottom, and is made of a conductive material such as metal. For example, steel, stainless steel, or nickel-plated steel may be applied to the material of the battery housing 20. The upper surface opposite to the opening will be referred to as a closed portion. The side wall and the closed portion of the battery housing 20 may be formed integrally. Alternatively, the side wall and the closed portion of the battery housing 20 may be provided separately and then coupled to each other by welding or the like. The upper surface (parallel to the X-Y plane) of the battery housing 20, i.e., the outer surface of the closed portion, may be configured to be substantially flat. The battery housing 20 accommodates the electrode assembly 10 through the opening formed at the bottom, and also accommodates an electrolyte.

The battery housing 20 is electrically connected to the electrode assembly 10. The battery housing 20 is electrically connected to, for example, the second uncoated area 12 of the electrode assembly 10. In this case, the battery housing 20 has the same polarity as the second uncoated area 12.

The battery housing 20 may have a beading portion 21 and/or a crimping portion 22 formed at the upper end thereof. The beading portion 21 is formed adjacent to the upper opening of the battery housing 20. The beading portion 21 is configured to be recessed inward along the outer circumference of the battery housing 20. That is, the beading portion 21 is configured to be recessed to a predetermined depth from the outer circumference of the battery housing 20 in the radial direction and extend along the circumferential direction of the battery housing 20. The beading portion 21 may prevent the electrode assembly 10 having a size corresponding to the width of the battery housing 20 from popping out through the upper opening of the battery housing 20, and may function as a support on which the top cap assembly 30 is seated.

The crimping portion 22 may be formed on the upper end of the battery housing 20. The crimping portion 22 may be configured to extend inward from the upper circumference of the battery housing 20 in the radial direction of the cylindrical battery cell 1. The crimping portion 22 is provided in an area corresponding to the circumference of the upper surface of the top cap assembly 30 so as to fix the top cap assembly 30, thereby preventing the top cap assembly 30 from being separated upward. In the case where the beading portion 21 is provided in the battery housing 20, the crimping portion 22 is formed on the beading portion 21. The crimping portion 22 is configured to extend and bend from the beading portion 21 so as to wrap around the outer surface and a portion of the upper surface of the top cap assembly 30 disposed on the beading portion 21. The upper end of the crimping portion 22 may extend a predetermined distance inward in the radial direction of the cylindrical battery cell 1 to wrap around a portion of the upper surface of the top cap assembly 30. Accordingly, the crimping portion 22 fixes the edge of the upper surface of the top cap assembly 30. That is, the edge of the top cap assembly 30 is fixed to the battery housing 20 while being interposed between the upper end of the crimping portion 22 and the beading portion 21, and covers the opening of the battery housing 20.

Referring to FIGS. 1 to 3, the top cap assembly 30 is a component made of conductive metal and covers the upper opening of the battery housing 20. The top cap assembly 30 is electrically connected to the first electrode of the electrode assembly 10 and is electrically insulated from the battery housing 20. Therefore, the top cap assembly 30 may have a first polarity the same as the first electrode of the electrode assembly 10 and function as a first electrode terminal of the cylindrical battery cell 1 of the present disclosure. The electrical connection between the first electrode and the top cap assembly 30 may be made by, for example, a current collector 50 and/or a lead 51.

The top cap assembly 30 may be seated on the beading portion 21 formed on the battery housing 20. The top cap assembly 30 is fixed by the crimping portion 22. That is, the edge of the lower surface of the top cap assembly 30 may be supported by the upper surface of the beading portion 21, and the edge of the upper surface may be fixed by folding the upper portion of the crimping portion 22. Meanwhile, a sealing gasket 40 may be interposed between the top cap assembly 30 and the crimping portion 22 of the battery housing 20 so as to seal the upper opening of the battery housing 20 and electrically insulate the battery housing 20 and the top cap assembly 30 from each other. The sealing gasket 40 may include a material having insulation and elasticity. The sealing gasket 40 may include, for example, a polymer resin.

The sealing gasket 40 may be bent to conform to the bent shape of the crimping portion 22 of the battery housing 20. In the case where the battery housing 20 has the beading portion 21, the sealing gasket 40 may be interposed between the upper surface of the beading portion 21 and the upper end of the crimping portion 22.

In another aspect of the present disclosure, the top cap assembly 30 may include a top cap 31 and a venting member 32.

The top cap assembly 30 may have a top cap 31 formed to protrude upward from approximately its center. More specifically, the top cap 31 may be positioned approximately at the center of the top cap assembly 30 and configured to protrude upward. The top cap 31 may be provided at a position corresponding to a hole formed approximately at the center of the battery cell 1. The top cap 31 may protrude further upward than the upper surface of the battery housing so as to facilitate contact with electrical connection components such as a bus-bar.

The venting member 32 may be a substantially plate-shaped structure that wrap arounds the outer circumference of the top cap 31. The venting member 32 may be configured to support the top cap 31 from below and wrap around the edge of the top cap 31 upward. Therefore, the end of the venting member 32 is positioned on the upper surface of the top cap 31. Meanwhile, the pressure inside the battery housing 20 may increase depending on the charging and discharging of the battery, and in this case, if the venting member 32 fails to withstand the pressure, it may flip upward, so that a notched portion may be broken. In this case, venting gas may be discharged to the outside of the venting member 32 through the broken portion. Meanwhile, although not specifically illustrated in the drawing, the top cap 31 may have an outlet capable of discharging such venting gas to the outside. Therefore, the venting gas discharged to the outside of the venting member 32 may be finally discharged to the outside of the battery cell 1 through the outlet provided in the top cap 31.

Meanwhile, the first electrode of the electrode assembly 10 may be coupled to the lower surface of the venting member 32 through the lead 51 and/or the safety element 60. Therefore, the venting member 32 has the same polarity as the first electrode. Meanwhile, since the venting member 32 wrap around the edge of the top cap 31, the top cap 31 also has the same polarity as the first electrode.

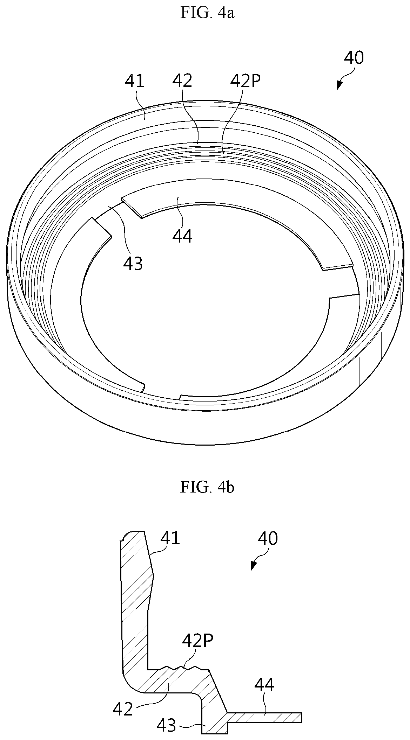

FIG. 4a is a perspective view of a sealing gasket 40 included in the battery cell 1 in FIG. 1, and FIG. 4b is a partially cross-sectional view of a sealing gasket 40 included in the battery cell 1 in FIG. 1.

In one aspect of the present disclosure, the venting member 32 may include a bumpy region 32P having a bumpy surface. The bumpy region 32P may be provided on at least a portion of the venting member 32. For example, as shown in FIG. 4b, the bumpy region 32P may be provided on at least a portion of the lower surface of the venting member 32. For example, the bumpy region 32P may be provided on a surface where the venting member 32 comes into contact with the sealing gasket 40.

With this structure, the contact area and friction between the sealing gasket 40 and the top cap assembly 30 may increase, thereby improving the sealing force between the sealing gasket 40 and the top cap assembly 30.

Referring to FIGS. 1 to 4b, the sealing gasket 40 may be interposed between the battery housing 20 and the top cap assembly 30. For example, the sealing gasket 40 may be interposed between the crimping portion 22 of the battery housing 20 and the top cap assembly 30. More specifically, the sealing gasket 40 may be interposed between the upper surface of the beading portion 21 and the upper end of the crimping portion 22. The sealing gasket 40 may seal the upper opening of the battery housing 20. The sealing gasket 40 may be configured to electrically insulate the battery housing 20 and the top cap assembly 30 from each other.

In one aspect of the present disclosure, the sealing gasket 40 may have an expandable member B in a state expected to be expanded or an expanded state in at least a portion. The expandable member B may be configured to fill a gap between the sealing gasket 40 and the top cap assembly 30 when it is in the expanded state. The expandable member B may include a foaming agent. At least a portion of the sealing gasket 40 may be coated with a foaming agent. For example, the foaming agent may include at least one of ADCA, OBSH, DPT, or an inorganic substance.

The foaming agent may be configured to foam at a specific temperature and/or pressure range. For example, if the foaming agent includes ADCA (azodicarbonamide), the foaming agent may foam at about 181 to 198 degrees C.

According to the characteristics of the present disclosure, the void space G formed between the top cap assembly 30 and the sealing gasket 40 in the beading and crimping processes may be easily filled. Here, the crimping process indicates a process of sealing the battery cell 1. Specifically, the crimping process is a process of sealing the inside of the battery cell 1 from the outside by pressing the upper parts of the sealing gasket 40 seated on the battery cell 1 and the battery housing toward the inside of the battery cell 1. Meanwhile, in the crimping process, the sealing gasket 40 may be bent in a direction toward the inside of the battery cell 1. Specifically, the sealing gasket 40 may be bent to conform to the bent shape of the crimping portion 22 of the battery housing 20. In this case, since the shape of the inner surface of the bent sealing gasket 40 does not perfectly match the shape of the outer surface of the top cap assembly 30 that is in contact with the inner surface of the sealing gasket 40, a predetermined void space G is often formed between the top cap assembly 30 and the sealing gasket 40. In such a case, the void space G forms a leakage path of the electrolyte and/or gas when the pressure inside the battery increases, thereby increasing the risk of leakage.

On the other hand, according to the present disclosure, even if a void space G is formed between the top cap assembly 30 and the sealing gasket 40 as described above, the foaming agent coated on the sealing gasket 40 may foam under predetermined conditions, thereby filling the entire void space G. Thus, according to the present disclosure, the risk of leakage of the electrolyte and/or gas from the battery may be effectively reduced.

In another aspect of the present disclosure, the sealing gasket 40 may include a material having insulation and elasticity. The sealing gasket 40 may include a polymer resin. For example, the sealing gasket 40 may include polybutylene terephthalate (PBT). However, it is obvious that the material of the sealing gasket 40 of the present disclosure is not limited thereto.

According to these characteristics of the present disclosure, the sealing gasket 40 may be easily bent during the crimping process. In addition, it may be easy to coat the surface of the sealing gasket 40 with a foaming agent. In addition, since the sealing gasket 40 has elasticity, the shape thereof may be deformed to come into close contact with the surrounding components. Accordingly, the sealing force may be further improved.

Referring to FIGS. 4a and 4b, the sealing gasket 40 may include a first part 41, a second part 42, and a third part 43. The sealing gasket 40 may further include a fourth part 44.

More specifically, the first part 41 may be configured in the form of a ring extending in a direction parallel to the axial direction of the battery cell 1. The first part 41 may have a cylindrical shape having a predetermined radius. That is, as shown in FIGS. 4a and 4b, the first part 41 may be configured in the form of an approximate pipe having a predetermined height.

The first part 41 may be bent in a direction toward the inside of the battery cell 1. Specifically, the first part 41 may be bent to conform to the bent shape of the crimping portion 22 of the battery housing 20. In this case, the bent portion may be configured to be perpendicular to the axial direction of the battery cell 1. As a result, the first part 41 after being bent may have the shape of approximate " 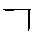 " bent toward the inside of the battery cell 1.

The first part 41 may be seated on the beading portion 21. That is, the lower end of the first part 41 may be configured to be in contact with the beading portion 21.

The second part 42 may be configured to extend horizontally from the lower end of the first part 41 toward the central axis of the battery cell 1. That is, the second part 42 may be configured to be perpendicular to the axial direction of the battery cell 1. For example, the second part 42 may be configured in the form of a token having a predetermined width.

In another aspect of the present disclosure, the second part 42 may include a bumpy region 42P configured to have a bumpy surface. The bumpy region 42P may be provided on at least a portion of the second part 42. For example, as shown in FIG. 4b, the bumpy region 42P may be provided on at least a portion of the upper surface of the second part 42. For example, the bumpy region 42P may be provided on a surface where the second part 42 is in contact with the top cap assembly 30.

With this structure, the contact area and friction between the sealing gasket 40 and the top cap assembly 30 may increase, thereby improving the sealing force between the sealing gasket 40 and the top cap assembly 30. If, as shown in FIG. 4b, the top cap assembly 30 further includes a bumpy region 32P, the sealing force may be further improved.

Preferably, the bumpy region 42P provided in the sealing gasket 40 and the bumpy region 32P provided in the top cap assembly 30 may be configured to have complementary shapes. For example, the bumpy region 42P provided in the sealing gasket 40 and the bumpy region 32P provided in the top cap assembly 30 may be configured to have sawtooth shapes that interlock with each other.

According to this structure, the contact area and friction between the sealing gasket 40 and the top cap assembly 30 are further increased, so the sealing force between the sealing gasket 40 and the top cap assembly 30 is further improved.

In another aspect of the present disclosure, the second part 42 may be seated on the beading portion 21. That is, a horizontally extended portion of the second part 42 may be seated on the beading portion 21. Accordingly, the second part 42 may support the top cap assembly 30.

The third part 43 may extend downward from the inner end of the second part 42. The third part 43 may be configured to have a smaller radius than the radius of the first part 41. The third part 43 may be configured in the form of a ring extending in a direction parallel to the axial direction of the battery cell 1. The third part 43 may have a cylindrical shape having a predetermined radius. That is, as shown in FIGS. 4a and 4b, the third part 43 may be configured in the form of an approximate pipe having a predetermined height.

The sealing gasket 40 may further include a fourth part 44. The fourth part 44 may be configured to extend horizontally from the third part 43 toward the central axis of the battery cell 1. For example, the fourth part 44 may be configured to extend horizontally from the center point of the third part 43 toward the central axis of the battery cell 1. The second part 42 may be configured to be perpendicular to the axial direction of the battery cell 1. For example, the second part 42 may be configured in the form of a token having a predetermined width. The fourth part 44 may be configured to support the safety element 60. For example, the fourth part 44 may support the safety element 60 upward.

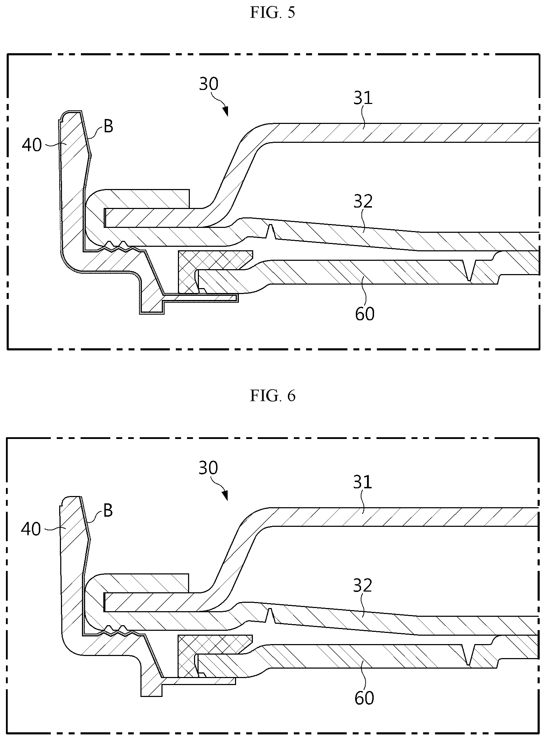

FIG. 5 is a drawing illustrating a sealing gasket 40 according to an embodiment of the present disclosure.

In one aspect of the present disclosure, the sealing gasket 40 may have a foaming agent applied to at least a portion thereof. For example, as shown in the embodiment in FIG. 5, the foaming agent may be coated on the entire area of the sealing gasket 40.

According to this structure, the coating process of the sealing gasket 40 may be facilitated. Accordingly, the manufacturing process may be simplified and economic efficiency may be secured. In addition, according to these characteristics of the present disclosure, the void space G formed between the top cap assembly 30 and the sealing gasket 40 during the beading and crimping processes may be entirely filled. Accordingly, according to the present disclosure, the risk of leakage of the electrolyte and/or gas from the battery may be effectively reduced.

FIG. 6 is a drawing illustrating a sealing gasket 40 according to another embodiment of the present disclosure.

In another aspect of the present disclosure, the sealing gasket 40 may have a foaming agent applied to at least a portion thereof. More specifically, the foaming agent may be coated on the inner surface of the sealing gasket 40. Here, the inner surface indicates the surface on the sealing gasket 40 facing the central axis of the battery cell 1. On the other hand, the outer surface indicates the surface of the sealing gasket 40 facing the outside of the battery cell 1. Meanwhile, since the path through which the electrolyte and/or gas leaks is in contact with the inner side of the sealing gasket 40 rather than the outer side, if a foaming agent is coated on the inner surface of the sealing gasket 40, the void space G formed between the top cap assembly 30 and the sealing gasket 40 during the beading and crimping processes may be entirely filled.

Accordingly, according to the present disclosure, the risk of leakage of the electrolyte and/or gas from the battery may be effectively reduced. In addition, according to the embodiment above, since there is no need to coat the foaming agent on the outer surface of the sealing gasket 40, costs may be reduced. In addition, it is possible to eliminate the influence of the micro error that may occur due to the foaming agent coating.

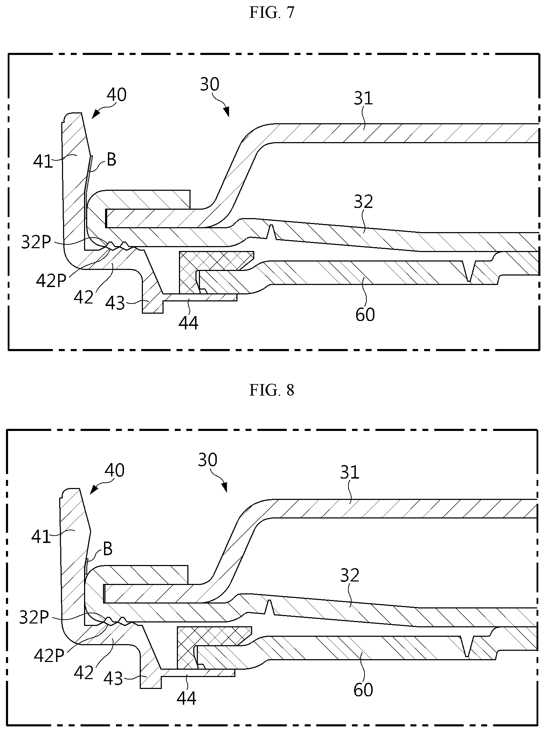

FIG. 7 is a drawing illustrating a sealing gasket 40 according to another embodiment of the present disclosure.

In another aspect of the present disclosure, the foaming agent may be coated on the first part 41. For example, referring to FIG. 7, the foaming agent is coated on at least a portion of the first part 41. The void space G between the top cap assembly 30 and the sealing gasket 40 is formed at a portion where the venting member 32 is bent to wrap around the top cap 31 in the crimping process. Therefore, even if the foaming agent is coated only on the area where the venting member 32 of the top cap assembly 30 and the sealing gasket 40 come into contact, the effect of the present disclosure may be obtained. In this case, the area where the venting member 32 of the top cap assembly 30 and the sealing gasket 40 come into contact mainly corresponds to the first part 41 and the second part 42 of the sealing gasket 40. Here, in particular, the bent portion of the venting member 32 may come into contact with the first part 41 of the sealing gasket 40.

Therefore, according to the embodiment of the present disclosure in which the foaming agent is coated on the first part 41 of the sealing gasket 40, the risk of leakage of the electrolyte and/or gas from the battery may be effectively reduced. In addition, according to the embodiment above, since there is no need to coat the foaming agent on the second part 42 or the third part 43 of the sealing gasket 40, the cost may be reduced. In addition, it is possible to eliminate the influence of the micro error that may occur due to the foaming agent coating.

FIG. 8 is a drawing illustrating a sealing gasket 40 according to another embodiment of the present disclosure.

In another aspect of the present disclosure, the foaming agent may be coated on the central area of the first part 41. Preferably, the foaming agent may be coated on the bent area of the first part 41. For example, referring to FIG. 8, the foaming agent may be coated on the central area of the first part 41. In an embodiment of the present disclosure, the axial height of the top cap assembly 30 seated on the sealing gasket 40 may be less than about 1/2 of the axial height of the first part 41. With this structure, the sealing gasket 40 may sufficiently cover the top cap assembly 30. If the axial height of the top cap assembly 30 seated on the sealing gasket 40 is greater than about 1/2 of the axial height of the first part 41, the area of the sealing gaskets 40 covering the upper surface of the venting member 32 is reduced, thereby lowering the sealing force.

Therefore, considering this structure, it is preferable that the foaming agent is coated on the central area of the first part 41. More preferably, the foaming agent may be coated on the bent area of the first part 41. Referring to FIG. 8, the venting member 32 may be bent to wrap the top cap 31 around. In this case, the foaming agent may be intensively coated around the bent portion of the venting member 32.

Accordingly, according to the present disclosure, the risk of leakage of the electrolyte and/or gas from the battery may be effectively reduced. In addition, according to the embodiment above, since there is no need to coat the foaming agent on the outer surface of the sealing gasket 40, the cost may be reduced. In addition, it is possible to eliminate the influence of the micro error that may occur due to the foaming agent coating.

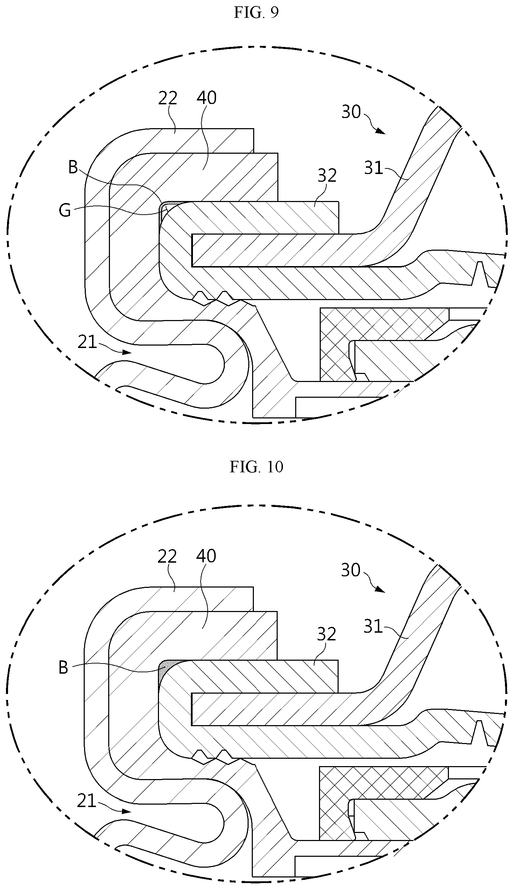

FIG. 9 is a drawing illustrating a state of a battery cell 1 before foaming according to an embodiment of the present disclosure, and FIG. 10 is a drawing illustrating a state of a battery cell 1 after foaming according to an embodiment of the present disclosure.

FIG. 9 shows the state in which the battery cell 1 is sealed after the crimping process. That is, both the sealing gasket 40 seated on the battery cell 1 and the upper part of the battery housing are pressed toward the inside of the battery cell 1 to seal the inside of the battery cell 1 from the outside. In the crimping process described above, the sealing gasket 40 may be bent toward the inside of the battery cell 1. Specifically, the sealing gasket 40 may be bent to conform to the bent shape of the crimping portion 22 of the battery housing 20. In this case, since the shape of the inner surface of the bent sealing gasket 40 does not perfectly match the shape of the outer surface of the top cap assembly 30 that is in contact with the inner surface of the sealing gasket 40, a predetermined void space G is often formed between the top cap assembly 30 and the sealing gasket 40. Meanwhile, during the crimping process, since the battery housing 20 receives a force in a direction perpendicular to the surface of the crimping portion 22, the top cap assembly 30 may be further pushed toward the inside of the battery cell 1. Accordingly, the predetermined void space G between the top cap assembly 30 and the sealing gasket 40 may become larger. In that case, the void space G forms a leakage path of the electrolyte and/or gas when the pressure inside the battery increases, thereby increasing the risk of leakage of the electrolyte and/or gas. However, according to an embodiment of the present disclosure, as shown in FIG. 9, a foaming agent is coated around the void space G. More specifically, the foaming agent may be coated on the surface of the sealing gasket 40 facing the void space G. The foaming agent may foam under predetermined temperature and pressure conditions. For example, in the case where the foaming agent includes ADCA (azodicarbonamide), the foaming agent may foam at 181 to 198 degrees C.

FIG. 10 shows a state in which the foaming agent has foamed at a predetermined temperature and pressure. The foaming agent may foam to fill the entirety of the void space G. Accordingly, no void space G exists between the sealing gasket 40 and the top cap assembly 30. In addition, since the volume increases as the foaming agent foams, the sealing force may be further improved. Accordingly, the risk of leakage of the electrolyte and/or gas accommodated in the battery housing 20 to the outside of the battery housing 20 may be significantly reduced.

As described above, according to the present disclosure, even if a void space G is formed between the top cap assembly 30 and the sealing gasket 40 as described above, the void space G may be completely filled with the foaming agent, coated on the sealing gasket 40, foaming under certain conditions. Thus, according to the present disclosure, the risk of leakage of the electrolyte and/or gas from the battery may be effectively reduced.

Meanwhile, the expandable member B of the present disclosure may be accommodated in the accommodation space provided in the sealing gasket 40. In this case, the expandable member B may be stably positioned between the sealing gasket 40 and the top cap assembly 30 even in a non-expanded state. For example, the expandable member B may be at least partially inserted into a groove provided in a portion of the sealing gasket 40.

Meanwhile, the current collector 50 is coupled to the top of the electrode assembly 10. The current collector 50 may be positioned between the electrode assembly 10 and the beading portion 21. The current collector 50 is made of conductive metal and is coupled to the first uncoated area 11. The current collector 50 is electrically connected to the top cap assembly 30. A lead 51 may be connected to the current collector 50, and the lead 51 may extend upward to be directly connected to the top cap assembly 30 or to be connected to a safety element 60 coupled to the lower surface of the top cap assembly 30. Therefore, the top cap assembly 30 may have a first polarity the same as the first uncoated area 11, and may function as a first electrode terminal.

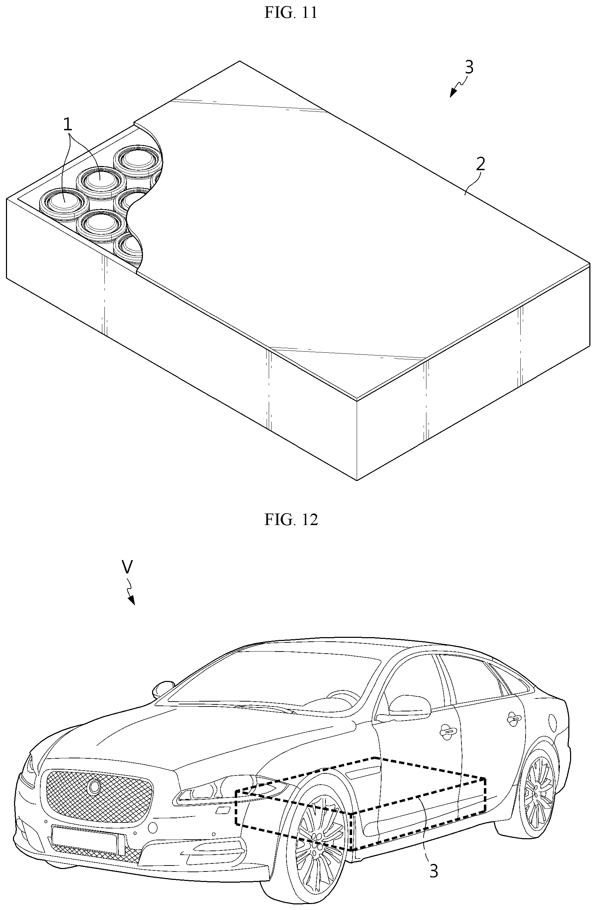

FIG. 11 is a drawing illustrating a battery pack including the battery module in FIG. 1.

Referring to FIG. 11, the battery pack 3 according to the present disclosure may include at least one battery cell 1 according to the present disclosure described above. In addition, the battery pack 3 according to the present disclosure may include a pack case 2 capable of accommodating at least one battery cell 1. In addition, the battery pack 3 may further include other various components in addition to the battery cell 1, such as components of the battery pack 3 known at the time of filing the present disclosure, for example, a BMS, a pack case, a relay, a current sensor, and the like.

FIG. 12 is a drawing illustrating a vehicle including the battery pack in FIG. 11.

Referring to FIG. 12, a vehicle 5 according to the present disclosure may include at least one battery pack 3 according to the present disclosure.

The battery module according to the present disclosure may be applied to a vehicle such as an electric vehicle or a hybrid vehicle. That is, the vehicle according to the present disclosure may include a battery module according to the present disclosure or a battery pack according to the present disclosure. In addition, the vehicle according to the present disclosure may further include other various components included in the vehicle, in addition to the battery module or battery pack. For example, the vehicle according to the present disclosure may further include a car body, a motor, a control device such as an ECU (electronic control unit), and the like, in addition to the battery module according to the present disclosure.

Meanwhile, although terms indicating directions such as up and down are used in this specification, it is obvious to those skilled in the art to which the present disclosure pertains that these terms are only for convenience of explanation and may vary depending on the position of the target object or the position of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Description of Reference numerals]

5: Vehicle
3: Battery pack
2: Pack case
1: Battery cell
10: Electrode assembly
11: First uncoated area
12: Second uncoated area
20: Battery housing
21: Beading portion
22: Crimping portion
30: Top cap assembly
31: Top cap
32: Venting member
40: Sealing gasket
41: First part
42: Second part
43: Third part
44: Fourth part
B: Foaming agent
50: Current collector
51: Lead
60: Safety element

## Claims

1. A battery cell comprising:
an electrode assembly comprising a first electrode, a second electrode, and a separator interposed therebetween;
a battery housing configured to accommodate the electrode assembly through an opening formed on one side;
a top cap assembly configured to cover the opening, electrically connected to the first electrode, and electrically insulated from the battery housing;
a sealing gasket interposed between the battery housing and the top cap assembly, and configured to electrically insulate the battery housing and the top cap assembly from each other; and
an expandable member provided in at least a portion of the sealing gasket so as to be in a state expected to be expanded or an expanded state, and configured to fill a gap between the sealing gasket and the top cap assembly when in the expanded state.

2. The battery cell according to claim 1,
wherein the sealing gasket comprises a material having insulation and elasticity.

3. The battery cell according to claim 1,
wherein the sealing gasket comprises polybutylene terephthalate (PBT).

4. The battery cell according to claim 1,
wherein the sealing gasket comprises:
a first part having a ring shape extending in a direction parallel to an axial direction of the battery cell and configured to be bent toward an inside of the battery cell;
a second part extending horizontally from a lower end of the first part toward a central axis of the battery cell; and
a third part extending downward from an inner end of the second part and having a radius smaller than a radius of the first part.

5. The battery cell according to claim 4,
wherein the battery housing has a beading portion configured to be recessed inward along an outer circumference thereof.

6. The battery cell according to claim 5,
wherein the sealing gasket is seated on the beading portion.

7. The battery cell according to claim 5,
wherein the first part and the second part are seated on the beading portion.

8. The battery cell according to claim 1,
wherein the expandable member comprises a foaming agent, and
wherein the foaming agent comprises at least one of ADCA, OBSH, DPT, and an inorganic substance.

9. The battery cell according to claim 1,
wherein the expandable member comprises a foaming agent, and
wherein the foaming agent foams at 181 to 198 degrees C.

10. The battery cell according to claim 1,
wherein the expandable member comprises a foaming agent, and
wherein the foaming agent is disposed on an inner surface of the sealing gasket.

11. The battery cell according to claim 4,
wherein the expandable member comprises a foaming agent, and
wherein the foaming agent is disposed on the first part.

12. The battery cell according to claim 4,
wherein the expandable member comprises a foaming agent, and
wherein the foaming agent is disposed in a central area of the first part.

13. The battery cell according to claim 4,
wherein the expandable member comprises a foaming agent, and
wherein the foaming agent is disposed in a bent portion of the first part.

14. A battery pack comprising at least one battery cell according to any one of claims 1 to 13.

15. A vehicle comprising at least one battery pack according to claim 14.
